# EUROPEAN PATENT SPECIFICATION

(11) **EP 2 797 209 B1**
(45) Date of publication and mention of the grant of the patent: **02.11.2016**
(21) Application number: 11878008.9
(22) Date of filing: 22.12.2011
(51) Int. Cl.: H02K 9/22, H02K 5/10, H02K 5/18, H02K 5/20, H02K 9/14, H02K 9/06

(54) **CASING FOR OPEN, DROPLET-PROOF ROTARY ELECTRIC MACHINES**
GEHÄUSE FÜR OFFENE, TROPFENDICHTE ELEKTRISCHE DREHMASCHINEN
CARTER POUR MACHINES ÉLECTRIQUES TOURNANTES DU TYPE ABRITÉ

(43) Date of publication of application: 29.10.2014
(73) Proprietor: Weg Equipamentos Elétricos S.A. - Motores, 89256-900 Jaragua do Sul - SC (BR)
(72) Inventor: CEZARIO, Cassiano Antunes, CEP 89252-260 Jaraguá do Sul - SC (BR)
(74) Representative: Stöckeler, Ferdinand
(86) International application number: PCT/BR2011/000496
(87) International publication number: WO 2013/091037

(56) References cited:
- WO-A2-2010/081140
- WO-A2-2010/081463
- JP-A- H 099 574
- JP-A- H04 140 732
- JP-A- 2010 273 423
- US-A- 4 839 547
- US-A1- 2003 155 106
- US-A1- 2010 102 648
- US-A1- 2010 172 091

## Description

### FIELD OF THE INVENTION

The present patent of the invention relates to a casting for rotating electrical machines, preferably for the open drip-proofing type machines granted of fins arranged in its interior, so that to increase the heat exchange of the stator and casting with a cooling fluid, maintaining an uniform temperature distribution along the length of the stator and coils.

### BACKGROUND OF THE INVENTION

In rotating electrical machines, the presence of an efficient heat exchange system is fundamental for components temperature maintenance of the rotating electrical machines within normal conditions of operation specified by the project. Although the rotating electrical machines runs with high levels of yield, a portion of electrical energy when converted in mechanic energy, or vice-versa, ends up turning into thermal energy.

The removal of thermal energy in an open drip-proof rotating electrical machine, the term open drip-proof (ODP), is performed directly, i.e., through direct contact of a cooling fluid (usually air) with the machine components, mainly coil heads, stator, rotor and short circuit rings, once it is in these components that the process of converting electrical energy into thermal energy occurs. The main physical mechanism by which the thermal energy of the machine components migrates to the cooling fluid is called forced convection and basically depends on the surface in contact with the cooling fluid and on this fluid speed on the surface, being possible to obtain different combinations of these two parameters resulting in the same heat exchange coefficient.

### DESCRIPTION OF THE PRIOR ART

The life time of a rotating electrical machine is proportional to the thermal aspect, once the lower the temperature, the longer the useful life of the electrical insulation system of this machine. The removal of the thermal energy from the interior of the electrical machine is performed mainly by the forced convection mechanism, which succinctly consists in increasing the cooling fluid speed over the machine components where the conversion of electrical energy into thermal energy occurs, so as to remove the greatest amount of thermal energy that is possible. However, given a series of constructive characteristics of the rotating electrical machine and of the cooling fluid properties, there is a thermal energy limit that can be removed by the forced convection mechanism of a surface, being that from this limit the outflow increment of the cooling fluid has its effect minimized or no effect at all. The increment of the cooling fluid speed is normally achieved through a ventilation system, that most of the time has the ventilation system rotor set in motion by the rotating electrical machine shaft itself. The difference of the pressure generated by the movement of the fan rotor gives rise to the cooling fluid offset, being that this movement frequently has turbulent characteristics, generating an acoustic noise of aerodynamic nature that is undesirable in most of the cases. Other common characteristic to the most of the rotating electrical machine is that the higher the machine power is, the higher the amount of thermal energy generated that needs to be removed will be. As a consequence, the greater is the necessary outflow of the cooling fluid to maintain the rotating electrical machine components temperature within desirable limits. However, when increasing the outflow of the cooling fluid, the acoustic noise level generated by the electrical machine ventilation system itself also increases.

In the open casting for drip-proof electrical rotating machines, usually few contact points are used between the casting and the stator, being that the number of points varies from four to ten. In the case of the US patent 4,766,337 there are only six points. Usually, the contact points have only a structural function, i.e., to support/position the stator inside the casting. In electrical rotating machines where the ratio of the stator length by the external diameter of the stator exceeds 0.5 it is noted that, in laboratory tests, a higher elevation of temperature in the center of the stator relative to the ends. This fact occurs due to the stator ends have greater area of heat exchange, since the thermal energy can be dissipated by the cylindrical shell or by the stator face.

Still considering the US patent 4766337, the thermal energy contained in the stator, whether it has been generated or conducted for this, is basically dissipated by the cylindrical shell surface of the same. The only way to remove the heat by the outflow of the cooling fluid passing between the casting and the external diameter of the stator is through the stator cylindrical shell surface and through the little contact area between the stator and the casting; latter, through the conduction mechanism. To minimize the problem of temperature ranging along the length of the stator, it is usually through the ventilation radial channels, either in the stator as in the rotor, as can be verified in the US patent 4766337. Such practice results in an extra cost, besides generating significant complexity to the production process, i.e., rotating electrical machine manufactured in series or to meet a specialty. Besides the economic aspect, the presence of radial ducts can also result in increased acoustic noise, especially in cases where the coincidence of the rotor ducts occurs with the ones of the stator in the axial direction due to the aerodynamic phenomenon known as passing frequency noise.

In the US patent of the invention 4839547 it is noted that a casting with several contact points with the stator, granted of fins either in the internal part as in its external part, along its length. However, a drawback of the casting in this particular patent is the fact that the ventilation circuit is unilateral and the said casting does not contemplate a way to allow minimizing the temperature gradients occurring along the stator.

### OBJECT OF THE INVENTION

The present invention aims to increase the removal of the thermal energy from the interior of the open drip-proof rotating electrical machines type, through an increase in the number of contact points between the casting and the stator, with fins having purposely different lengths, aggregating the function of maximize the heat exchange area and standardize the temperature distribution inside the stator and coils. Thus, the novelty proposed by the present invention is directly related to the maximization of the casting heat exchange internal area together with the standardization of the temperature distribution inside the stator and coils, allowing exempt the costly steps of forming radial air flow channels in stators and rotors of rotating electrical machines.

### BRIEF DESCRIPTION OF THE DRAWINGS

FIG. 1 illustrates a perspective view of the casting.
FIG. 2 illustrates a cross section of the casting.
FIG. 3a illustrates the cooling fluid outflow in the region between a stator and the casting of the prior art achieved through dynamic simulation of the computational fluids.
FIG. 3b illustrates the cooling fluid outflow in the region between the stator and the casting of the present invention achieved through dynamic simulation of the computational fluids.
FIG. 4a illustrates a thermographic image of the prior art engine.
FIG. 4b illustrates a thermographic image of the present invention engine.
FIG. 5 illustrates a partial cross sectioned view of the casting being used in an open induction engine rotating electrical machine type, with illustrative purpose, of the cooling fluid outflow distribution.

### DETAILED DESCRIPTION OF THE DRAWINGS

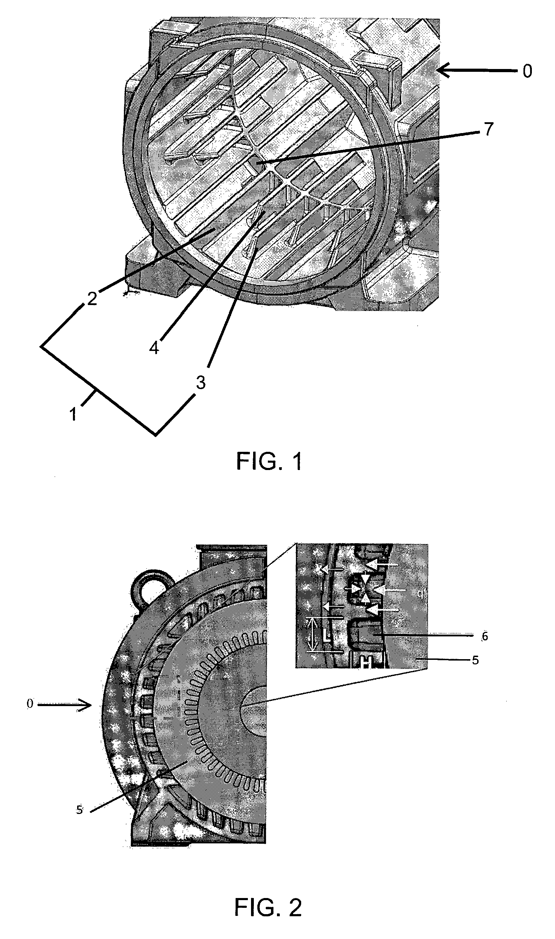

According to figs. 1 and 2, the casting (0) comprises a contact fins system (1) distributed along the casting internal surface (0). These fins (1) have different sizes, some of them with length equal to the casting, called continuous contact fins (2), others with medium length, called medium length contact fins (3), and yet with short length, called short length contact fins (4). The combination of the use of continuous contact fins (2), medium length contact fins (3) and short length (4) aim to homogenize the temperature distribution inside the stator (5) and coils (10). Combinations of different sizes and the amount of each one of the three types of fin can range according to the project characteristics of the rotating electrical machine.

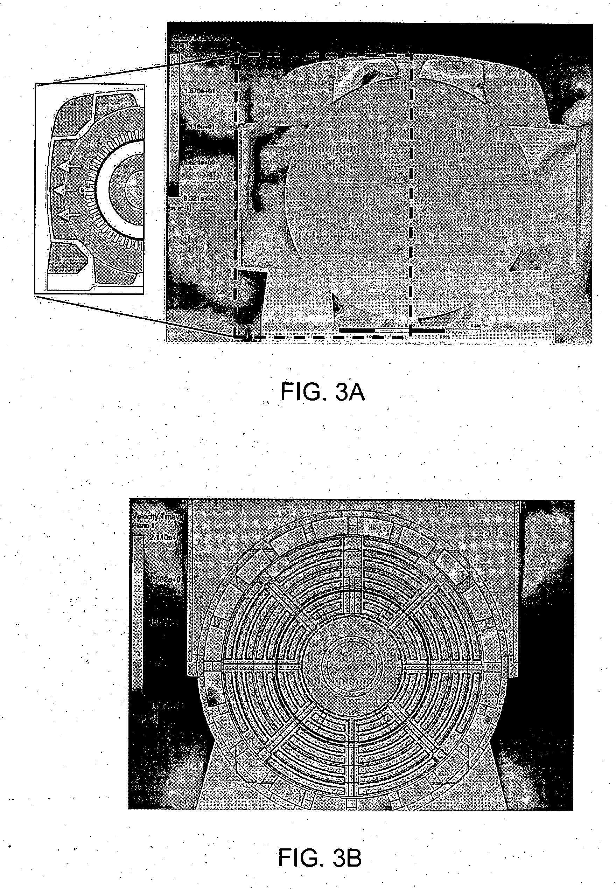

Contact fins (1) can have a wedge shape or the like, and they protrude radially or orthogonally, in direction to the stator (5), forming a ducts system (6) where the air outflow will pass. In these ducts (6) it becomes easier to maintain an even cooling fluid speed level, avoiding increased gradients of the cooling fluid speed (as it occurs in the concepts present in the prior art that use few contact elements, which fluid outflow is showed in FIG. 3a). Moreover, due to the cooling fluid outflow movement is performed by the fan rotor (9), the rotor circular movement (not shown) enters in the outflow a radial component that tends to address the greater portion of the cooling fluid outflow and, consequently, the greater cooling fluid speed component, to the casting periphery (0), away from the stator surface (5), as can be seen in FIG. 3a. In the present invention, due to the increased number and especially to the arrangement of different types of contact fins (1) between the stator (5) and the casting (0), a portion of the thermal energy (q'), FIG. 2, is addressed to the casting (0) and is subsequently transferred to the cooling fluid outflow, taking advantage of the additional speed of the outflow located in the casting internal surface (0).

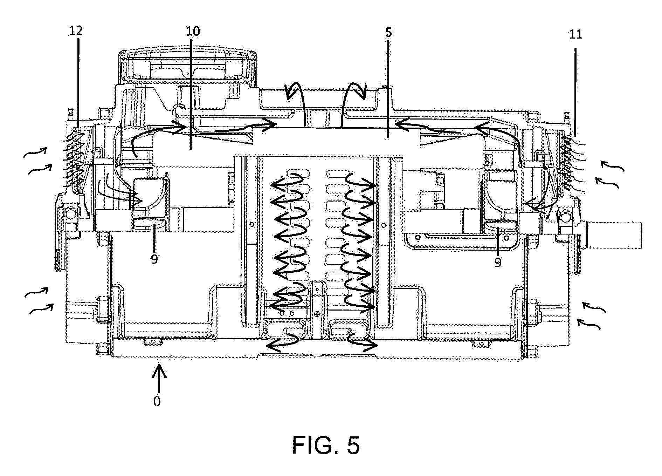

Given the nature of the ventilation system of this rotating electrical machine type to be bilateral, i.e., air inlet by front (11) and rear (12) lids seen in FIG. 5, there is a separator element (7) of the ventilation circuit positioned in the central region of the casting (0).

In an incorporation, according to FIG. 1, the casting internal surface (0) comprises a plurality of contact fins (1) arranged preferably such as to interleave the presence of continuous contact fins (2), medium length (3) and short length (4), in the stator central region (5), what allows standardize the temperature along the length of the stator without the necessity of passing through the ventilation radial channels, that basically consist of plates pack subdivisions allowing the cooling fluid passage between the plates forming the stator.

In an incorporation, the continuous contact fins (2) show length equivalent to the casting (0), the medium length fins (3) correspond to 2/3 of the casting total length (0) e o short length fins (4) correspond to 1/3 of the casting total length (0).

According to FIG. 2, the ratio of height (H) by the width (L) of the ducts formed by the contact fins (1), the casting (0) and the stator (5) comprised from 0.1 to 4.0 are understood as preferable.

Based on FIG. 3b, it can be noted in the present invention, besides the possibility of thermal energy (q'), FIG. 2, be drawn by the stator surface, the increase of the contact area between the stator and the casting allows the thermal energy conduction to the casting, so that the same is dissipated by the channels sides (6) that are formed in the whole casting internal surface. Additionally, it can be noted that the heat exchange occurs through the external surface of the casting, but with a lower portion than the one exchanged by the internal surface. Totally opposite situation to the solutions found in the prior art (FIG. 3a), where the thermal energy output (q') of the stator (5) basically occurs through the cylindrical shell of the stator.

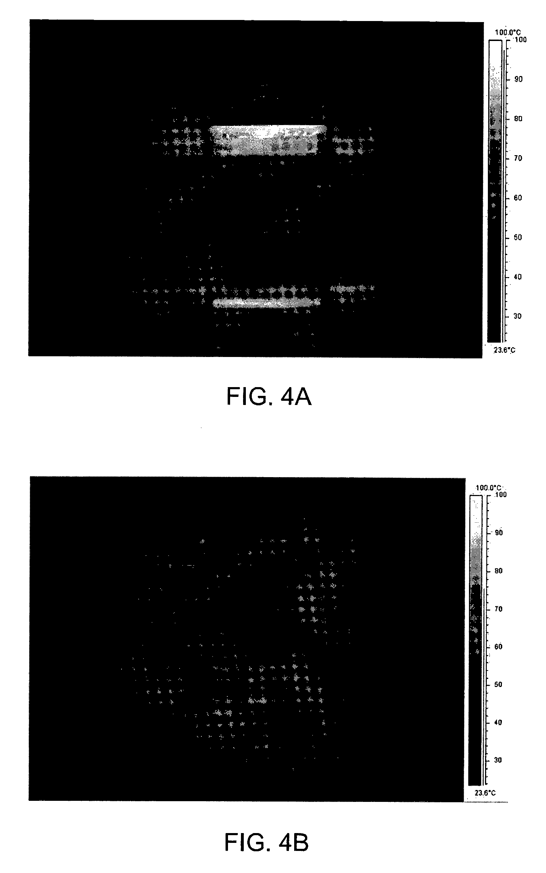

Analyzing the thermographic images showed in FIG. 4a and 4b, the efficiency and operation of the present invention is clear. In FIG. 4a it is possible to note from a thermographic image of an open drip-proof rotating electrical machine type side that higher levels of temperature, and consequently of the thermal energy, are located and concentrated in two points where the contact between the stator and the casting takes place. It is highlighted that this is an example of the conception usually adopted for open drip-proof rotating electrical machines.

FIG. 4b shows a thermographic image achieved from an open drip-proof rotating electrical machine type with the same power characteristics and of amount of thermal energy of the one shown in FIG. 4a. The difference between the two machines is that the one from FIG. 4b uses a manufactured casting according to the present invention, where an even distribution of temperature along the central region of the casting and lower levels of temperature can be noted, which proves the operation and efficiency of the present invention.

## Claims

1. A casting for an open drip-proof rotating electrical machine, the casting comprising:
a plurality of fins (1) having a wedge shape, the fins (1) arranged longitudinally in an interleaved way along a casting internal surface (0), the fins (1) being in contact with a stator (5) in a stator central region, the fins (1) forming ducts (6) where an air outflow will pass,
**characterized in that**
the fins (1) comprise continuous contact fins (2), medium length contact fins (3) and short length contact fins (4).

2. The casting according to claim 1, wherein the lengths of the continuous contact fins (2) are equivalent to the casting total length (0), the medium length fins (3) correspond to 2/3 of the casting total length (0) and the short length fins (4) correspond to 1/3 of the casting total length (0).

3. The casting according to claim 1 or 2, wherein the lengths of the medium length fins (3) correspond to 2/3 of the casting total length (0) and the short length fins (4) correspond to 1/3 of the casting total length (0), wherein both dimensions include a tolerance of 25% around this value.

4. The casting according to claim 1, wherein the ratio of height by width of the ducts (6) that are formed by the fins (1), the casting (0) and the stator (5) is between 0.1 and 4.0.

5. The casting according to claim 1, comprising a separation element (7) positioned in a central region of the casting (0).

## Patentansprüche

1. Ein Gehäuse für eine offene tropfwassergeschützte rotierende elektrische Maschine, wobei das Gehäuse folgende Merkmale aufweist:
eine Mehrzahl von Rippen (1) mit einer Keilform, wobei die Rippen (1) longitudinal auf verschachtelte Weise entlang einer Gehäuseinnenoberfläche (0) angeordnet sind, wobei die Rippen (1) mit einem Stator (5) in einer Statormittelregion in Kontakt sind, wobei die Rippen (1) Kanäle (6) bilden, durch die ein Luftfluss strömen wird,
**dadurch gekennzeichnet, dass**
die Rippen (1) Rippen mit durchgehendem Kontakt (2), Rippen mit Kontakt mittlerer Länge (3) und Rippen mit Kontakt kurzer Länge (4) aufweisen.

2. Das Gehäuse gemäß Anspruch 1, bei dem die Längen der Rippen mit durchgehendem Kontakt (2) äquivalent sind zu der Gehäusegesamtlänge (0), die Rippen mittlerer Länge (3) 2/3 der Gehäusegesamtlänge (0) entsprechen und die Rippen kurzer Länge (4) einem Drittel der Gehäusegesamtlänge (0) entsprechen.

3. Das Gehäuse gemäß Anspruch 1 oder 2, bei dem die Längen der Rippen mittlerer Länge (3) 2/3 der Gehäusegesamtlänge (0) entsprechen und die Rippen kurzer Länge (4) einem Drittel der Gehäusegesamtlänge (0) entsprechen, wobei beide Abmessungen eine Toleranz von 25% um diesen Wert herum umfassen.

4. Das Gehäuse gemäß Anspruch 1, bei dem das Verhältnis der Höhe zur Breite der Kanäle (6), die durch die Rippen (1), das Gehäuse (0) und den Stator (5) gebildet sind, zwischen 0, 1 und 4, 0 liegt.

5. Das Gehäuse gemäß Anspruch 1, das ein Trennelement (7) aufweist, das in einer Mittelregion des Gehäuses (0) positioniert ist.

## Revendications

1. Carter pour une machine électrique tournante ouverte du type abrité, le carter comprenant:
une pluralité d'ailettes (1) présentant une forme de coin, les ailettes (1) étant disposées longitudinalement de manière entrelacée le long d'une surface interne du carter (0), les ailettes (1) étant en contact avec un stator (5) dans une région centrale de stator, les ailettes (1) formant des conduits (6) dans lesquels passera un flux de sortie d'air,
**caractérisé par le fait que**
les ailettes (1) comprennent des ailettes de contact continues (2), des ailettes de contact de longueur médiane (3) et des ailettes de contact de courte longueur (4).

2. Carter selon la revendication 1, dans lequel les longueurs des ailettes de contact continues (2) sont équivalentes à la longueur totale du carter (0), les ailettes de longueur médiane (3) correspondent à 2/3 de la longueur totale du carter (0) et les ailettes de courte longueur (4) correspondent à 1/3 de la longueur totale du carter (0).

3. Carter selon la revendication 1 ou 2, dans lequel les longueurs des ailettes de longueur médiane (3) correspondent à 2/3 de la longueur totale du carter (0) et les ailettes de courte longueur (4) correspondent à 1/3 de la longueur totale du carter (0), dans lequel les deux dimensions incluent une tolérance de 25% autour de cette valeur.

4. Carter selon la revendication 1, dans lequel le rapport entre la hauteur et la largeur des conduits (6) qui sont formés par les ailettes (1), le carter (0) et le stator (5) est compris entre 0,1 et 4,0.

5. Carter selon la revendication 1, comprenant un élément de séparation (7) positionné dans une région centrale du carter (0).
